# EUROPEAN PATENT APPLICATION

(11) **EP 4 383 812 A1**
(43) Date of publication of application: **12.06.2024**
(21) Application number: 22852053.2
(22) Date of filing: 29.07.2022
(51) Int. Cl.: H04W 36/00

(54) **MOBILITY MANAGEMENT METHOD, TERMINAL, AND NETWORK SIDE DEVICE**

(30) Priority: 02.08.2021 CN 202110882888
(71) Applicant: Vivo Mobile Communication Co., Ltd., Dongguan, Guangdong 523863 (CN)
(72) Inventor: HE, Ranran, Dongguan, Guangdong 523863 (CN); YANG, Xiaodong, Dongguan, Guangdong 523863 (CN); BAO, Wei, Dongguan, Guangdong 523863 (CN); ZHANG, Yanxia, Dongguan, Guangdong 523863 (CN)
(74) Representative: Lavoix
(86) International application number: PCT/CN2022/108899
(87) International publication number: WO 2023/011340

(57) **Abstract**

This application discloses a mobility management method, a terminal, and a network-side device, and pertains to the field of wireless communication technologies. The mobility management method in embodiments of this application includes: obtaining, by a terminal, target configuration information, where the target configuration information includes duration information of a plurality of candidate cells; and performing, by the terminal, at least one of a cell selection procedure or a connection reestablishment procedure based on the target configuration information.

## Description

### CROSS-REFERENCE TO RELATED APPLICATIONS

The present invention claims priority to Chinese Patent Application No. 202110882888.6, filed with the China National Intellectual Property Administration on August 2, 2021 and entitled "MOBILITY MANAGEMENT METHOD, TERMINAL, AND NETWORK-SIDE DEVICE", which is incorporated herein by reference in its entirety.

### TECHNICAL FIELD

This application pertains to the field of wireless communication technologies, and specifically, relates to a mobility management method, a terminal, and a network-side device.

### BACKGROUND

A radio link failure (Radio Link Failure, RLF), a common handover failure, or a conditional handover (Conditional Handover, CHO) failure may trigger a radio resource control (Radio Resource Control, RRC) connection reestablishment procedure. Cell selection needs to be performed in the RRC connection reestablishment procedure. If a suitable cell (suitable cell) selected by a terminal (UE) is a candidate cell (candidate cell) for conditional handover configured by a network, and if the network configures attemptCondReconfig=true, the UE applies a conditional reconfiguration of this cell and attempts to perform CHO; otherwise, the UE initiates a process of transmitting an RRC connection establishment request (RRCReestablishmentRequest) message.

However, for existing cell selection, after handover to a suitable cell, there may be a situation where the suitable cell selected by the UE will soon stop serving, resulting in a CHO failure or the need for handover again soon.

### SUMMARY

Embodiments of this application provide a mobility management method, a terminal, and a network-side device, which can resolve the problem that a cell selected by a terminal will stop serving soon, resulting in a connection reestablishment failure.

According to a first aspect, a mobility management method is provided, including: obtaining, by a terminal, target configuration information, where the target configuration information includes duration information of a plurality of candidate cells; and performing, by the terminal, at least one of a cell selection procedure or a connection reestablishment procedure based on the target configuration information.

According to a second aspect, a mobility management apparatus is provided, including: a first obtaining module, configured to obtain target configuration information, where the target configuration information includes duration information of a plurality of candidate cells; and an execution module, configured to perform, at least one of a cell selection procedure or a connection reestablishment procedure based on the target configuration information.

According to a third aspect, a mobility management method is provided, including: sending, by a network-side device, target configuration information to a terminal, where the target configuration information includes duration information of a plurality of candidate cells, and indicates the terminal to perform a connection reestablishment procedure and/or a cell selection procedure based on the duration information.

According to a fourth aspect, a mobility management apparatus is provided, including: a second obtaining module, configured to obtain target configuration information for a terminal, where the target configuration information includes duration information of a plurality of candidate cells, and indicates the terminal to perform a connection reestablishment procedure and/or a cell selection procedure based on the duration information; and a transmitting module, configured to transmit the target configuration information to the terminal.

According to a fifth aspect, a terminal is provided, where the terminal includes a processor, a memory, and a program or instructions stored in the memory and capable of running on the processor, and when the program or the instructions are executed by the processor, the steps of the method according to the first aspect are implemented.

According to a sixth aspect, a terminal is provided, including a processor and a communication interface, where the processor is configured to implement the steps of the method according to the first aspect, and the communication interface is configured to communicate with a network-side device.

According to a seventh aspect, a network-side device is provided, where the network-side device includes a processor, a memory, and a program or instructions stored in the memory and capable of running on the processor, and when the program or the instructions are executed by the processor, the steps of the method according to the third aspect are implemented.

According to an eighth aspect, a network-side device is provided, including a processor and a communication interface, where the processor is configured to implement the steps of the method according to the third aspect, and the communication interface is configured to communicate with a terminal.

According to a ninth aspect, a readable storage medium is provided, where a program or instructions are stored in the readable storage medium, and when the program or the instructions are executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions to implement the steps of the method according to the first aspect or implement the steps of the method according to the third aspect.

According to an eleventh aspect, a computer program/program product is provided, where the computer program/program product is stored in a non-transitory storage medium, and the program/program product is executed by at least one processor to implement the steps of the method according to the first aspect or the steps of the method according to the third aspect.

In the embodiments of the application, the terminal obtains the target configuration information, where the target configuration information includes the duration information of the plurality of candidate cells, and then performs at least one of the cell selection procedure or the connection reestablishment procedure based on the target configuration information. In this way, the duration information of the cells can be considered in at least one of the cell selection procedure or the connection reestablishment procedure, to avoid the problem of connection reestablishment failures caused because a selected target cell stops serving.

### BRIEF DESCRIPTION OF DRAWINGS

FIG. 1 is a schematic diagram of a wireless communication system to which the embodiments of this application are applicable;
FIG. 2 is a flowchart of a mobility management method according to an embodiment of this application;
FIG. 3 is another flowchart of a mobility management method according to an embodiment of this application;
FIG. 4 is still another flowchart of a mobility management method according to an embodiment of this application;
FIG. 5 is yet another flowchart of a mobility management method according to an embodiment of this application;
FIG. 6 is yet another flowchart of a mobility management method according to an embodiment of this application;
FIG. 7 is a structural diagram of a mobility management apparatus according to an embodiment of this application;
FIG. 8 is another structural diagram of a mobility management apparatus according to an embodiment of this application;
FIG. 9 is a schematic structural diagram of a communication device according to an embodiment of this application;
FIG. 10 is a schematic diagram of a hardware structure of a terminal according to an embodiment of this application; and
FIG. 11 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

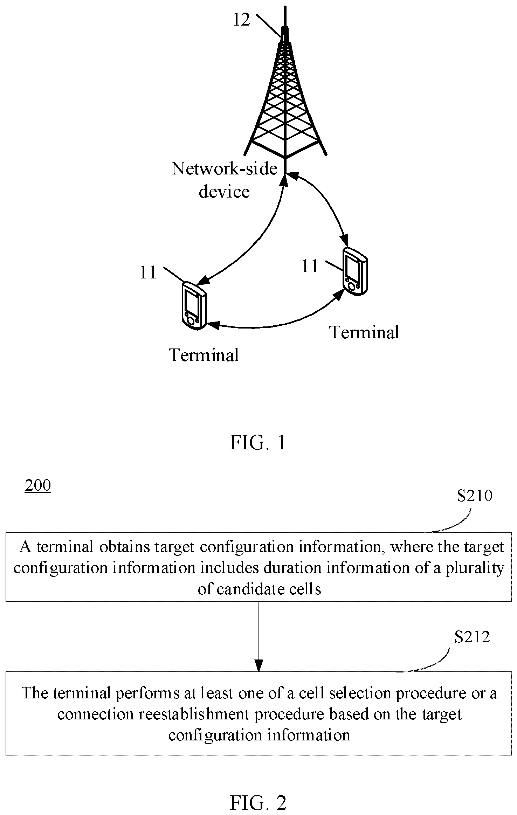

FIG. 1 is a schematic diagram of a wireless communication system to which the embodiments of this application are applicable. The wireless communication system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a smart watch, a wrist band, earphones, glasses, or the like. It should be noted that a specific type of the terminal 11 is not limited in the embodiments of this application. The network-side device 12 may be a base station or a core network. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail the mobility management scheme provided in the embodiments of this application by using some embodiments and application scenarios thereof with reference to the accompanying drawings.

FIG. 2 is a schematic flowchart of a mobility management method according to an embodiment of this application. The method 200 may be executed by a terminal. In other words, the method may be performed by software or hardware installed on the terminal. As shown in FIG. 2, the method may include the following steps.

S210: The terminal obtains target configuration information, where the target configuration information includes duration information of a plurality of candidate cells.

In this embodiment of the application, the terminal may obtain the target configuration information via dedicated signaling. For example, the target configuration information is obtained via RRCReconfiguration signaling.

S212: The terminal performs at least one of a cell selection procedure or a connection reestablishment procedure based on the target configuration information.

Through a series of research, the applicant found that duration information of a cell, for example, duration information when the cell started to provide service and/or duration information when the cell stopped serving, was not considered in the related technologies. Because satellite cells are mobile, a suitable cell selected by the UE may stop serving soon, resulting in a CHO failure or the need for handover again soon. If the suitable cell selected by the UE is not a network-configured candidate cell or the network does not configure attemptCondReconfig, the UE initiates a process of transmitting an RRCReestablishmentRequest message. Similarly, if the duration information of the cell is not considered, the suitable cell selected by the UE may soon stop serving, which may lead to a reestablishment failure.

Therefore, in this embodiment of the application, the duration information of the cell in at least one of the cell selection procedure or the connection reestablishment procedure is considered, so as to avoid the problem of connection reestablishment failures caused by the fact that a selected target cell will stop serving, thereby improving the success rate and stability of connection reestablishment.

In a possible implementation, the performing, by the terminal, a cell selection procedure based on the target configuration information includes: in a case that a current time is within a time period indicated by duration information of a first target cell, preferentially selecting, by the terminal, the first target cell in the cell selection procedure. The cell selection procedure may be cell selection in an idle or inactive state, or may be cell selection in a connected state, for example, cell selection performed by the terminal during connection reestablishment.

In a possible implementation, the performing, by the terminal, a connection reestablishment procedure based on the target configuration information includes: in a case that the current time is within a time period indicated by duration information of a second target cell, applying, by the terminal, a conditional reconfiguration for the second target cell in the connection reestablishment procedure, where the first target cell is one of the plurality of candidate cells, and the second target cell is one of the plurality of candidate cells.

In a possible implementation, the target configuration information may include but is not limited to at least one of the following:
(1) First configuration information, where the first configuration information includes conditional reconfigurations of the plurality of candidate cells.
(2) Second configuration information, where the second configuration information is used to indicate using a first target candidate cell as the second target cell and applying the conditional reconfiguration for the second target cell in a case that the current time is within a time period indicated by duration information of the first target candidate cell, where the first target candidate cell is a candidate cell selected by the terminal in the connection reestablishment procedure.
   For example, the second configuration information is used to indicate that in the connection reestablishment procedure, if a selected cell is a candidate cell that meets conditional handover and the current time is within a time period indicated by duration information of the selected cell, the UE needs to perform conditional reconfiguration of the selected cell. Optionally, the selected cell may be a cell selected for the first time after a failure, where the failure includes an RLF, a handover failure, or a CHO failure. For example, the second configuration information is attemptCondReconfig=true.
(3) First event, where the first event indicates the terminal to apply the conditional reconfiguration for the second target cell in the connection reestablishment procedure in a case that the current time is within the time period indicated by the duration information of the second target cell, where the time period indicated by the duration information of the second target cell includes one of the following: a time period from a third time to a fourth time, a time after a fifth time, and a time before a sixth time.
   In this embodiment of the application, the first event is configured per cell, that is, each cell is configured with one first event, for example, the first event of each cell may be configured based on a service time of each cell.
(4) Second event, where the second event indicates the terminal to preferentially select the first target cell in the cell selection procedure in a case that the current time is within the time period indicated by the duration information of the first target cell, where the time period indicated by the duration information of the first target cell includes one of the following: a time period from a seventh time to an eighth time, a time after a ninth time, and a time before a tenth time.

In this embodiment of the application, the second event is configured per cell, that is, each cell is configured with one second event, for example, the second event of each cell may be configured based on a service time of each cell.

It should be noted that in the foregoing possible implementations, the network-side device may send the first configuration information, the second configuration information, the first event, and the second event via same dedicated signaling, for example, sending the first configuration information, the second configuration information, the first event, and the second event using same dedicated signaling. Alternatively, the network-side device may send the first configuration information, the second configuration information, the first event, and the second event via different dedicated signaling, for example, sending the first configuration information, the second configuration information, the first event, and the second event separately using four pieces of dedicated signaling.

In the foregoing possible implementations, the first configuration information may include but is not limited to at least one of the following:
(1) A plurality of candidate cells, where the plurality of candidate cells are conditional reconfiguration candidate cells for conditional handover; that is, the first configuration information includes conditional reconfiguration information of the plurality of candidate cells for conditional handover.
(2) Third event for each candidate cell, where the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell includes one of the following: a time period from a first time to a second time, a time after the first time, and a time before the second time.
   For example, in non-terrestrial communication networks (Non-Terrestrial Networks), considering a large propagation delay in the NTN, CHO may be introduced into the NTN to improve robustness of handover. Because the satellite is far away from the ground, reference signal received power (Reference Signal Received Power, RSRP)/reference signal received quality (Reference Signal Received Quality, RSRQ) measured by the UE in different NTN cells may be very close, and because motion of the satellite is predictable, a new trigger condition may be introduced to CHO in the NTN, for example, a time trigger event (time trigger event) (that is, the third event). For each candidate cell (candidate cell), if other execution conditions (that is, the fourth event) are satisfied, the UE needs to perform CHO within a time period [t1,t2].
(3) Fourth event for each candidate cell, where the fourth event is used to trigger a conditional handover.

For example, after determining to perform a CHO handover, a source base station sends a handover request message to two or more potential target base stations and receives handover request response messages. Based on the handover response message, reconfiguration signaling for the conditional handover is generated, where the reconfiguration signaling for the conditional handover includes configurations of two or more candidate target cells, and includes an event for triggering the conditional handover (that is, the fourth event). After receiving the conditional reconfiguration signaling, the UE begins to evaluate a trigger event for the conditional handover. When any candidate target cell meets the trigger event for conditional handover, the UE considers the candidate cell as a triggered cell (triggered cell), applies a conditional reconfiguration of the triggered cell, detaches (detach) from a source cell, accesses the triggered cell synchronously, and then sends a CHO handover completion message in the triggered cell.

It should be noted that the fourth event is other events than the third event.

The fourth event may include at least one of the following:
(1) a trigger event based on at least one of signal strength or signal quality, that is, trigger event related to at least one of signal strength or signal quality; and
(2) a location-based trigger event, that is, trigger event related to a location.

In a possible implementation, the applying, by the terminal, the conditional reconfiguration for the second target cell in the connection reestablishment procedure in a case that the current time is within the time period indicated by the duration information of the second target cell includes: in a case that the target configuration information includes the second configuration information, that a cell selected by the terminal in the connection reestablishment procedure is a third target candidate cell in the plurality of candidate cells, and that the current time is within a time period indicated by duration information of the third target candidate cell, using the third target candidate cell as the second target cell, and applying the conditional reconfiguration for the second target cell. That is, in this possible implementation, in a case that the second configuration information is included in the target configuration information, that a cell selected by the terminal in the connection reestablishment procedure is in a plurality of candidate cells configured by the network side, and that the current time is within a time period indicated by duration information of the selected cell, a conditional reconfiguration of the selected cell is applied to attempt to perform CHO again. This can ensure to improve probability of successful secondary conditional handovers when the current time is within the time period indicated by the duration information of the conditional reconfiguration cell.

In another possible implementation, in a case that the target configuration information does not include the second configuration information, or that the current time is not within a time period indicated by duration information of a third target candidate cell, or that a cell selected in the connection reestablishment procedure is not one of the plurality of candidate cells, a process of initiating a connection establishment request is performed. That is, if the second configuration information is not included in the target configuration information, or the cell selected in the connection reestablishment procedure is not one of the plurality of candidate cells, or the current time is not within the time period indicated by the duration information of the selected cell, the terminal performs a process of initiating transmission of an RRCReestablishmentRequest (RRCReestablishmentRequest) message.

In a possible implementation, the current time being within the time period indicated by the duration information of the second target cell includes one of the following:
(1) The current time has reached a first time of the second target cell and has not exceeded a second time of the second target cell.

For example, the network-side device configures absolute time t1 and t2 for a time event triggering a conditional handover to the second target cell, where the first time is t1 and the second time is t2. Then, the conditional reconfiguration for the second target cell needs to be applied between t1 and t2 in the connection reestablishment procedure.

For another example, the network-side device configures absolute time t3 and offset1 for a time event triggering a conditional handover to the second target cell, where the first time is t3 and the second time is t3+offset1. Then, the conditional reconfiguration for the second target cell needs to be applied between t3 and t3+offset1 in the connection reestablishment procedure.

For another example, the network-side device configures offset2 and absolute time t4 for a time event triggering a conditional handover to the second target cell, where the first time is a time T1 after the time length of offset2 elapses upon reception of the conditional reconfiguration, and the second time is t4. Then, the conditional reconfiguration for the second target cell needs to be applied between time T1 and t4 in the connection reestablishment procedure.

The absolute time includes: coordinated universal time (Coordinated Universal Time, UTC), daylight saving time (Daylight Saving Time, DST), global positioning system (Global Positioning System, GPS) time, local time, and so on.

For another example, the network-side device configures timer 1 and timer 2 for a time event triggering a conditional handover to the second target cell. Timer 1 is started upon reception of the conditional reconfiguration, and timer 2 is started after timer 1 expires, where the first time is an expiration time of timer 1 and the second time is an expiration time of timer 2. Then, the conditional reconfiguration for the second target cell needs to be applied during running of timer 2 in the connection reestablishment procedure.

For another example, the network-side device configures timer 3 and offset3 for a time event triggering a conditional handover to the second target cell. The terminal starts timer 3 after an offset3 time elapses upon reception of the conditional reconfiguration, where the first time is a time after offsets elapses and the second time is an expiration time of timer 3. Then, the conditional reconfiguration for the second target cell needs to be applied during running of timer 3 in the connection reestablishment procedure.

For another example, the network-side device configures timer 4 and offset4 for a time event triggering a conditional handover to the second target cell, and the terminal starts timer 4 after receiving the conditional reconfiguration, where the first time is an expiration time of timer 4, and the second time is a time T2 after a time with the length of offset4 elapses upon expiration of timer 4. Then, the conditional reconfiguration for the second target cell needs to be applied in a time period from expiration of timer 4 to T2 in the connection reestablishment procedure.

(2) The current time has reached the first time of the second target cell. In a case that a time period indicated by the duration information of the third event is a time after the first time, the conditional reconfiguration for the second target cell needs to be applied after the first time of the second target cell.

(3) The current time has not exceeded the second time of the second target cell. In a case that a time period indicated by the duration information of the third event is a time before the second time, the conditional reconfiguration for the second target cell needs to be applied before the second time of the second target cell.

In the foregoing (1) to (3), in the connection reestablishment procedure, the duration information in the time event for triggering the conditional handover is reused, the conditional reconfiguration for the second target cell is applied in a case that the current time is within the time indicated by the duration information in the time event for triggering a conditional handover to the second target cell, and attempt is made to perform the conditional handover.

(4) The current time has reached a third time of the second target cell but has not exceeded a fourth time of the second target cell.

For example, the duration information related to the first event may be configured to be a time period from the third time to the fourth time:
1) Absolute time [t5,t6]: that is, the network-side device configures absolute time t5 and t6 for the first event of the second target cell, where the third time is t5 and the fourth time is t6; then the conditional reconfiguration for the second target cell needs to be applied between t5 and t6 in the connection reestablishment procedure.
2) Absolute time t7 and offsets: that is, the network-side device configures absolute time t7 and offsets for the first event of the second target cell, where the third time is t7 and the fourth time is t7+offset5; then the conditional reconfiguration for the second target cell needs to be applied between t7 and t7+offset5 in the connection reestablishment procedure.
3) Offset6 and absolute time t8: that is, the network-side device configures offset6 and absolute time t8 for a time event triggering a conditional handover to the second target cell, where the third time is a time T3 after the time length of offset6 elapses upon reception of the conditional reconfiguration, and the second time is t8. Then, the conditional reconfiguration for the second target cell needs to be applied between time T3 and t8 in the connection reestablishment procedure.
   The absolute time includes: coordinated universal time (Coordinated Universal Time, UTC), daylight saving time (Daylight Saving Time, DST), global positioning system (Global Positioning System, GPS) time, local time, and so on.
4) Timer 5 and timer 6: that is, the network-side device configures timer 5 and timer 6 for the first event of the second target cell, timer 5 is started upon reception of the configuration information containing the first event, and timer 6 is started after timer 5 expires, where the third time is an expiration time of timer 5, and the fourth time is an expiration time of timer 6. Then, the conditional reconfiguration for the second target cell needs to be applied during running of timer 6 in the connection reestablishment procedure.
5) Timer 7 and offset7: the network-side device configures timer 7 and offset7 for the first event of the second target cell, and the terminal starts timer 7 after an offset7 time elapses upon reception of the configuration information containing the first event, where the third time is a time after offset7 elapses and the fourth time is an expiration time of timer 7. Then, the conditional reconfiguration for the second target cell needs to be applied during running of timer 7 in the connection reestablishment procedure.
6) Timer 8 and offsets: the network-side device configures timer 8 and the offsets for a time event triggering a conditional handover to the second target cell, and the terminal starts timer 8 after receiving the configuration information containing the first event, where the first time is an expiration time of the timer 8, and the second time is a time T4 after a time with the length of offsets elapses upon expiration of timer 8. Then, the conditional reconfiguration for the second target cell needs to be applied in a period from expiration of timer 8 to T4 in the connection reestablishment procedure.

(5) The current time has reached the fifth time of the second target cell.

For example, the duration information related to the first event may be configured to be the fifth time. For example, the network-side device configures the duration information related to the first event to be absolute time t9, and the fifth time is t9. For another example, the network-side device configures the duration information related to the first event to be timer 9, and the terminal starts timer 9 when receiving a network-side configured message containing the timer 9. If the timer 9 expires, it means that it reaches the fifth time.

(6) The current time has not exceeded a sixth time of the second target cell. For example, the duration information related to the first event may be configured to be the sixth time. For example, the network-side device configures the duration information related to the first event to be absolute time t10, and the sixth time is t10. For another example, the network-side device configures the duration information related to the first event to be timer 10, and the terminal starts timer 10 when receiving a network-side configured message containing the timer 10. If the timer is running, it means that it has not reached the sixth time.

In (4) to (6), the conditional reconfiguration for the second target cell is applied within the time period indicated by the duration information related to the first event configured for the second target cell by the network-side device.

In a possible implementation, when the current time is within the time period indicated by the duration information of the first target cell, the preferentially selecting the first target cell includes: preferentially selecting the candidate cell for which a time indicated by the duration information includes the current time. That is, in the cell selection procedure, the terminal preferentially selects the candidate cell for which the time indicated by the duration information includes the current time. That is, the terminal preferentially selects the first target cell, where the current time is within the time period indicated by the duration information of the first target cell.

In the cell selection procedure of the terminal, based on its own capability, the terminal preferentially searches for the candidate cell for which the time indicated by the duration information includes the current time.

Optionally, the current time being within the time period indicated by the duration information of the first target cell includes one of the following:
(1) The current time has reached a first time of the first target cell and the current time has not exceeded a second time of the first target cell.
(2) The current time has reached the first time of the first target cell.
(3) The current time has not exceeded the second time of the first target cell.
   In the foregoing (1) to (3), in the cell selection procedure, the duration information in the time event for triggering conditional handover is reused, and the first target cell for which the duration information in the time event for triggering the conditional handover includes the current time is preferentially selected.
(4) The current time has reached a seventh time of the first target cell and the current time has not exceeded an eighth time of the first target cell.

For example, the network-side device configures absolute time t11 and t12 for the second event of the first target cell, where the seventh time is t11 and the eighth time is t12. In the cell selection procedure, if the current time is between t11 and t12, the first target cell needs to be preferentially selected.

For another example, the network-side device configures absolute time t13 and offset9 for the second event of the first target cell, where the seventh time is t13 and the eighth time is t13+offset9. In the cell selection procedure, if the current time is between t13 and t13+offset9, the first target cell needs to be preferentially selected.

For another example, the network-side device configures offset10 and absolute time t14 for the second event of the first target cell, where the seventh time is a time T5 after an offset10 time length elapses upon reception of the configuration information containing the second event, and the eighth time is t14. In the cell selection procedure, if the current time is between T5 and t14, the first target cell needs to be preferentially selected.

The absolute time includes: coordinated universal time (Coordinated Universal Time, UTC), daylight saving time (Daylight Saving Time, DST), global positioning system (Global Positioning System, GPS) time, local time, and so on.

For another example, the network-side device configures timer 11 and timer 12 for the second event of the first target cell, and timer 11 is started upon reception of the configuration information containing the second event, and timer 12 is started after timer 1 1 expires, where the seventh time is an expiration time of timer 11, and the eighth time is an expiration time of timer 12. In the cell selection procedure, if the current time is within a running period of timer 12, the first target cell needs to be preferentially selected.

For another example, the network-side device configures timer 13 and offset11 for the second event of the first target cell, and the terminal starts timer 13 after an offset11 time elapses upon reception of the configuration information containing the second event, where the seventh time is a time after offset11 elapses, and the eighth time is an expiration time of timer 13. In the cell selection procedure, if the current time is within a running period of timer 13, the first target cell needs to be preferentially selected.

For another example, the network-side device configures timer 14 and offset 12 for the second event of the first target cell, and the terminal starts timer 14 after receiving the configuration information containing the second event, where the seventh time is an expiration time of timer 14, and the eighth time is a time T6 after a time with the length of offset12 elapses upon expiration of timer 14. Then, in the cell selection procedure, if the current time is in a period between expiration of timer 14 and T6, the first target cell needs to be preferentially selected.

(5) The current time has reached the ninth time of the first target cell. For example, the duration information related to the second event may be configured to be the ninth time. For example, the network-side device configures the duration information related to the second event to be absolute time t15, and the ninth time is t15. For another example, the network-side device configures the duration information related to the first event to be timer 15, and the terminal starts timer 15 when receiving a network-side configured message containing the timer 15. If the timer 15 expires, it means that it reaches the ninth time.

(6) The current time has not exceeded a tenth time of the first target cell. For example, the duration information related to the second event may be configured to be the tenth time. For example, the network-side device configures the duration information related to the second event to be absolute time t16, and the tenth time is t16. For another example, the network-side device configures the duration information related to the first event to be timer 16, and the terminal starts timer 16 when receiving a network-side configured message containing the timer 16. If the timer is running, it means that it has not reached the tenth time.

In (4) to (6), when the current time is within the time period indicated by the duration information related to the second event configured by the network-side device for the first target cell, the first target cell is preferentially selected.

In the foregoing possible implementations, the terminal may initiate the connection reestablishment procedure in a case that one of the following events occurs:
an RLF is detected;
a handover fails; and
a conditional handover fails.

In a possible implementation, the preferentially selecting, by the terminal, the first target cell in the cell selection procedure in a case that the current time is within the time period indicated by the duration information of the first target cell includes at least one of the following:
(1) Preferentially searching for a target frequency in which a fourth target candidate cell is located; and in a case that a cell with a strongest signal searched on the target frequency is a fourth target candidate cell and that the fourth target candidate cell is a suitable cell, selecting the fourth target candidate cell as the first target cell, where the fourth target candidate cell is the candidate cell for which the time indicated by the duration information includes the current time. Optionally, if the cell with the strongest signal searched on the target frequency is not the fourth target candidate cell, other cells on the frequency are not considered.
   For example, a frequency in which the first target cell is located is searched first, and if a cell with the strongest signal on the frequency is the first target cell and satisfies the definition of the suitable cell, the first target cell is selected.
(2) Preferentially searching for a target frequency in which a fourth target candidate cell is located; and in a case that a cell with a strongest signal searched on the target frequency is not the fourth target candidate cell, that a cell with the n-th strongest signal searched on the target frequency is the fourth target candidate cell, and that the fourth target candidate cell is a suitable cell, selecting the fourth target candidate cell as the first target cell, where n is a positive integer greater than or equal to 2, and the fourth target candidate cell is the candidate cell for which the time indicated by the duration information includes the current time. Optionally, if the cell with the n-th strongest signal searched on the target frequency is not the fourth target candidate cell, other cells on the frequency are not considered.
   For example, the frequency in which the first target cell is located is searched first. If a cell with the strongest signal on the frequency is not the first target cell, a cell with the n-th strongest signal on the frequency is searched. If the cell with the n-th strongest signal is the first target cell and satisfies the definition of the suitable cell, the first target cell is selected, where n is a positive integer greater than or equal to 2.
(3) In a case that cells with the strongest signals searched on a plurality of frequency points include a plurality of suitable cells, and that the plurality of suitable cells include the fourth target candidate cell, selecting the fourth target candidate cell included in the plurality of suitable cells as the first target cell, where the fourth target candidate cell is the candidate cell for which the time indicated by the duration information includes the current time.

For example, if strongest cells on a plurality of frequency points satisfies the definition of the suitable cell, and the plurality of suitable cells contain the first target cell, the first target cell is selected.

In the foregoing possible implementations, when the target frequency in which the fourth target candidate cell is located is preferentially searched, if there are a plurality of fourth target candidate cells, a frequency in which a fourth target candidate cell with the longest target time in the plurality of fourth target candidate cells is located is preferentially searched, where the target time is determined based on the first time and the second time of the fourth target candidate cell or based on a seventh time and an eighth time of the fourth target candidate cell. Optionally, in the foregoing possible implementation, in a case that there are a plurality of fourth target candidate cells, selecting a fourth target candidate cell with the longest target time in the plurality of fourth target candidate cells as the first target cell, where the target time is determined based on the first time and second time of the fourth target candidate cell or based on the seventh time and the eighth time of the fourth target candidate cell.

Optionally, if the network-side device configures the second event for the fourth target cell, the target time of the fourth target candidate cell is determined based on the seventh time and the eighth time of the fourth target candidate cell, and if the second event is not configured, the target time of the fourth target candidate cell is determined based on the first time and the second time of the fourth target candidate cell.

In a specific implementation, if the target configuration information includes the third event of the fourth target candidate cell and does not include the second event of the fourth target candidate cell, and the duration information indicated by the third event includes a time period from the first time to the second time, then the target time is the time period from the first time to the second time.

In another specific implementation, if the target configuration information includes the second event of the fourth target candidate cell, and the duration information indicated by the second event includes a time period from the seventh time to the eighth time, then the target time is the time period from the seventh time to the eighth time.

It should be noted that, in this embodiment of this application, the foregoing behavior that the terminal preferentially selects the first target cell in the cell selection procedure and/or the terminal applies the conditional reconfiguration for the second target cell in the connection reestablishment procedure may be specified in the protocol or configured by the network side. If the foregoing behavior is specified in the protocol, the terminal always performs the foregoing behavior according to the prescription in the protocol. If the above behavior is configured by the network side, the terminal may perform the foregoing behavior according to the behavior configured by the network-side device.

For example, the network-side device may alternatively indicate by using a field whether the terminal performs the above behavior. For example, the network-side device may indicate by using one bit whether the terminal preferentially selects the first target cell and/or applies the conditional reconfiguration for the second target cell according to the foregoing descriptions. If a value of this bit is 1, it means that the terminal needs to perform the above behavior, and if the value of this bit is 0, it means that the terminal may not perform the above behavior. Alternatively, presence of the field may indicate that the terminal needs to perform the above behavior, and absence of the field may indicate that the terminal may not perform the above behavior. Alternatively, if the network side configures the first event, it means that the terminal needs to perform the behavior of applying the conditional reconfiguration for the second target cell in the connection reestablishment procedure, and if the network side configures the second event, it means that the terminal needs to perform the behavior of preferentially selecting the first target cell in the cell reselection procedure.

In this embodiment of this application, cell selection may include cell selection in an idle state or an inactive state or cell selection during connection reestablishment.

According to the technical solution provided in this embodiment of the application, in the connection reestablishment procedure, if the network configures attemptCondReconfig=true, the time period indicated by the duration information of the selected cell includes the current time, and the selected cell is a candidate cell, the conditional reconfiguration of the selected cell is applied to attempt to perform conditional handover; otherwise, a process of initiating transmission of an RRC reestablishment request message is performed, and/or a candidate cell whose duration information includes the current time is preferentially selected.

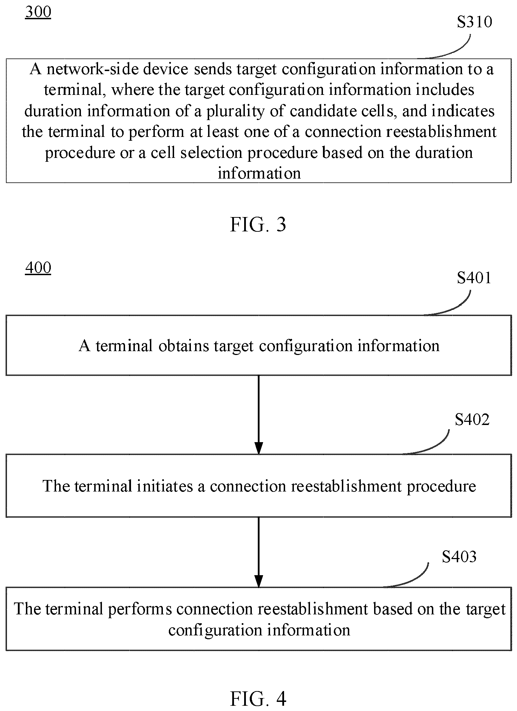

FIG. 3 is another schematic flowchart of a mobility management method according to an embodiment of this application. This method 300 may be executed by a network-side device, in other words, the method may be executed by software or hardware installed in the network-side device. As shown in FIG. 3, the method may include the following step.

S310: The network-side device sends target configuration information to a terminal, where the target configuration information includes duration information of a plurality of candidate cells, and indicates the terminal to perform a connection reestablishment procedure and/or a cell selection procedure based on the duration information.

In this embodiment of this application, the target configuration information is the same as the target configuration information in the method 200. For details, refer to the descriptions in the method 200.

In a possible implementation, the target configuration information includes at least one of the following:
first configuration information, where the first configuration information includes conditional reconfigurations of the plurality of candidate cells;
second configuration information, where the second configuration information is used to indicate using a first target candidate cell as the second target cell and applying the conditional reconfiguration for the second target cell in a case that the current time is within a time period indicated by duration information of the first target candidate cell, where the first target candidate cell is a candidate cell selected by the terminal in the connection reestablishment procedure;
a first event, where the first event indicates the terminal to apply the conditional reconfiguration for the second target cell in the connection reestablishment procedure in a case that the current time is within the time period indicated by the duration information of the second target cell, where the time period indicated by the duration information of the second target cell includes one of the following: a time period from a third time to a fourth time, a time after a fifth time, and a time before a sixth time; and
a second event, where the second event indicates the terminal to preferentially select the first target cell in the cell selection procedure in a case that the current time is within the time period indicated by the duration information of the first target cell, where the time period indicated by the duration information of the first target cell includes one of the following: a time period from a seventh time to an eighth time, a time after a ninth time, and a time before a tenth time.

In a possible implementation, the first configuration information includes at least one of the following:
a plurality of candidate cells, where the plurality of candidate cells are conditional reconfiguration candidate cells for conditional handover;
a third event for each candidate cell, where the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell includes one of the following: a time period from a first time to a second time, a time after the first time, and a time before the second time; and
a fourth event for each candidate cell, where the fourth event is used to trigger a conditional handover.

In a possible implementation, the fourth event includes at least one of the following:
a trigger event based on at least one of signal strength or signal quality; and
a location-based trigger event.

The following describes the mobility management method provided in the embodiments of the application using specific embodiments.

### Embodiment 1

FIG. 4 is yet another schematic flowchart of a mobility management method according to an embodiment of this application. As shown in FIG. 4, in this embodiment of the application, the mobility management method 400 mainly includes the following steps.

S401: A terminal obtains target configuration information.

The target configuration information may include:
(1) First configuration information, where the first configuration information includes conditional handover configuration information, and the first configuration information may include:
   (1.1) at least two candidate cells; and
   (1.2) an event for triggering execution of conditional handover in each candidate cell, where the trigger event for conditional handover in each candidate cell includes a third event and/or a fourth event.

The third event is used to indicate that if a target candidate cell meets the fourth event, the terminal is allowed to apply conditional handover configuration information of a target candidate cell and duration information for performing a conditional handover to the target candidate cell, where the duration information is a time period from a first time to a second time.

For example, the network configures absolute time t1 and t2. The first time is t1 and the second time is t2, and the duration information is a time period from t1 to t2.

For another example, the network configures absolute time t3 and offset1. The first time is t3 and the second time is t3+offset1, and the duration information is a time period from t3 to t3+offset1;

For example, the network side configures offset2 and absolute time t4, where the first time is a time T1 after an offset2 time length elapses upon reception of a conditional reconfiguration by the terminal, the second time is t4, and the duration information is a time period from T1 to t4.

For another example, the network configures timer 1 and timer 2. Timer 1 is started upon reception of the conditional reconfiguration, and timer 1 is started after timer 2 expires. The first time is an expiration time of timer 1, the second time is an expiration time of timer 2, and the duration information is a time period in which timer 2 runs.

For another example, the network configures timer 3 and offset2, and the terminal starts timer 3 after an offset2 time elapses upon reception of the conditional reconfiguration, where the first time is a time after offset2 elapses, the second time is an expiration time of timer 3, and the duration information is a running time of timer 3.

For another example, the network-side device configures timer 4 and offset4 for a time event triggering a conditional handover to the second target cell, and the terminal starts timer 4 after receiving the conditional reconfiguration, where the first time is an expiration time of timer 4, the second time is a time T2 after a time with the length of offset4 elapses upon expiration of timer 4, and the duration information is a time period from expiration of timer 4 to T2.

The fourth event is other events that the third event, including at least one of the following:
i. a trigger event related to at least one of signal strength or signal quality, such as event A4 or CondEvent A3 or CondEvent A5.
ii. a trigger event related to location, where, for example, a distance between the terminal and a reference point of a serving cell is greater than a threshold; or a distance between the terminal and a reference point of a target cell is less than a threshold; or a distance between the terminal and the reference point of the serving cell is greater than a threshold and the distance between the terminal and the reference point of the target cell is less than a threshold; or the distance between the terminal and the reference point of the serving cell is greater than the distance between the terminal and the reference point of the target cell; or the distance between the terminal and the reference point of the serving cell minus the distance between the terminal and the reference point of the target cell is greater than a threshold. The reference point may be a cell center.

The fourth event may not be configured, or the fourth event may include one or more trigger events.

(2) Second configuration information, where the second configuration information is used to indicate that if a selected target cell is a conditional handover candidate cell that meets the first condition and is a cell selected for the first time after failure, the UE needs to perform conditional reconfiguration of the target cell. The failure includes an RLF, a handover failure, or a CHO failure. For example, the second configuration information is attemptCondReconfig=true.

(3) First event, where the first event is used to indicate that the terminal is allowed in the connection reestablishment procedure to apply conditional handover configuration information of the target cell and duration information for performing conditional handover to the target cell.

For example, the first event may be configured to be a time period from a third time to a fourth time, for example:
1) Absolute time t5 and absolute time t6: that is, the network-side device configures absolute time t5 and t6 for the first event of the second target cell, where the third time is t5, the fourth time is t6, and the duration information is a time period from t5 to t6.
2) Absolute time t7 and offsets: the network-side device configures absolute time t7 and offsets for the first event of the second target cell, where the third time is t7, the fourth time is t7+offset5, and the duration information is a time period from t7 to t7+offset5.
3) Offset6 and absolute time t8: the network-side device configures offset6 and absolute time t8 for a time event for triggering the conditional handover of the second target cell, where the third time is T3 after the offset6 time length elapses upon reception of the conditional reconfiguration, the second time is t8, and the duration information is a time period from T3 to t8.
   The absolute time includes: coordinated universal time (Coordinated Universal Time, UTC), daylight saving time (Daylight Saving Time, DST), global positioning system (Global Positioning System, GPS) time, local time, and so on.
4) Timer 5 and timer 6: that is, the network-side device configures timer 5 and timer 6 for the first event of the second target cell, and the terminal starts timer 5 after receiving the configuration information containing the first event, and starts timer 6 after timer 5 expires, where the third time is an expiration time of timer 5, the fourth time is an expiration time of timer 6, and the duration information is a time period in which timer 6 runs.
5) Timer 7 and offset7: the network-side device configures timer 6 and offset7 for the first event of the second target cell, and the terminal starts timer 6 after an offset7 time elapses upon reception of the configuration information containing the first event, where the third time is a time after offset7 elapses, the fourth time is an expiration time of timer 7, and the duration information is a time period in which timer 7 runs.
6) Timer 8 and offsets: the network-side device configures timer 8 and the offsets for a time event triggering a conditional handover to the second target cell, and the terminal starts timer 8 after receiving the configuration information containing the first event, where the first time is an expiration time of the timer 4, and the second time is a time T4 after a time with the length of offsets elapses upon expiration of timer 8. The duration information is a time period from expiration of timer 8 to T4.

(5) The current time has reached the fifth time of the second target cell.

For example, the first event may be configured to be a fifth time, for example, the network side configures absolute time t9, and the fifth time is t9. Another example is that the network side configures timer 9, and the terminal starts timer 9 when receiving a configuration from the network side. If the timer expires, it means that the fifth time has been reached.

(6) The current time has not exceeded a sixth time of the second target cell.

For example, the first event may be configured to be a sixth time, for example, the network side configures absolute time t10, and the sixth time is t10. Another example is that the network side configures timer 10, and the terminal starts timer 10 when receiving a configuration from the network side. If the timer is running, it means that the sixth time has not been reached.

S402: The terminal initiates a connection reestablishment procedure.

The terminal initiates the connection reestablishment procedure when one of the following conditions occurs:
(1) an RLF is detected;
(2) a handover failure (Handover failure); and
(3) a conditional handover failure (Conditional Hanover failure).

The handover failure and the conditional handover failure include at least one of the following:
- T304 expires; and
- the second time expires.

For example, T304 expires, and regardless of whether the second time expires or not, it is considered that the handover fails.

For example, the second time expires, and regardless of whether T304 expires or not, it is considered that the handover fails.

For example, T304 expires and the second time expires, and it is considered that the handover fails.

S403: The terminal performs connection reestablishment based on the target configuration information.

S403 may include:
if the target configuration information includes the second configuration information, and the suitable cell selected in the connection reestablishment procedure is a conditional handover candidate cell satisfying the first condition, the selected suitable cell is the target cell, the conditional handover configuration of the target cell is applied, and attempt is made to perform the conditional handover; otherwise, a process of initiating transmission of the RRCReestablishmentRequest message is performed.

The satisfying the first condition includes one of the following:
the first time has been reached and the second time has not been exceeded;
the first time has been reached;
the second time has not been exceeded;
the third time has been reached and the fourth time has not been exceeded;
the fifth time has been reached; and
the sixth time has not been exceeded.

That is, in a case that the target configuration information includes the second configuration information, that a cell selected by the terminal in the connection reestablishment procedure is a third target candidate cell in the plurality of candidate cells, and that the current time is within a time period indicated by duration information of the third target candidate cell, the third target candidate cell is used as the second target cell, and the conditional reconfiguration for the second target cell is applied; otherwise, the process of initiating transmission of an RRCReestablishmentRequest message is performed.

The current time being within the time period indicated by the duration information of the second target cell includes one of the following:
the current time has reached a first time of the second target cell and has not exceeded a second time of the second target cell;
the current time has reached the first time of the second target cell;
the current time has not exceeded the second time of the second target cell;
the current time has reached a third time of the second target cell but has not exceeded a fourth time of the second target cell;
the current time has reached a fifth time of the second target cell; and
the current time has not exceeded a sixth time of the second target cell.

For example, if the network side does not configure the first event, it is determined, based on the duration information in the first configuration information of the second target cell, whether the current time is within the time period indicated by the duration information of the second target cell.

For example, the network configures absolute time t1 and t2, a suitable cell selected in the connection reestablishment procedure is a candidate cell for conditional handover, and t1 has been reached and/or t2 has not been exceeded. Then, the conditional handover configuration of the cell is applied and attempt is made to perform conditional handover; otherwise, the process of initiating transmission of the RRCReestablishmentRequest message to the cell is performed.

For example, the network configures absolute time t3 and offset1, a suitable cell selected in the connection reestablishment procedure is a candidate cell for conditional handover, and t3 has been reached and/or t3+offset1 has not been exceeded. Then, the conditional handover configuration of the cell is applied and attempt is made to perform conditional handover; otherwise, the process of initiating transmission of the RRCReestablishmentRequest message to the cell is performed.

For example, the network configures offset2 and absolute time t4, a suitable cell selected in the connection reestablishment procedure is a candidate cell for conditional handover, and a time T1 after the offset2 time length elapses upon reception of the conditional reconfiguration has been reached and/or t4 has not been exceeded. Then, the conditional handover configuration of the cell is applied and attempt is made to perform conditional handover; otherwise, the process of initiating transmission of the RRCReestablishmentRequest message to the cell is performed.

For example, the network configures timer 1 and timer 2. Timer 1 is started upon reception of the conditional reconfiguration, and timer 2 is started after timer 1 expires. The suitable cell selected in the connection reestablishment procedure is a candidate cell for conditional handover. During running of timer 2, the conditional handover configuration of the cell is applied and attempt is made to perform conditional handover; otherwise, the process of initiating transmission of the RRCReestablishmentRequest message to the cell is performed.

For example, if the network side configures the first event, it is determined, based on the duration information in the first event of the second target cell, whether the current time is within the time period indicated by the duration information of the second target cell. The first event is configured to be a time period from the third time to the fourth time, a suitable cell selected in the connection reestablishment procedure is a candidate cell for conditional handover, and the third time has not been reached and the fourth time has not been exceeded. Then, the conditional handover configuration of the cell is applied and attempt is made to perform conditional handover; otherwise, the process of initiating transmission of the RRCReestablishmentRequest message is performed.

For example, the network configures absolute time t5 and t6, a suitable cell (suitable cell) selected in the connection reestablishment procedure is a candidate cell for conditional handover, and t5 has been reached and/or t6 has not been exceeded. Then, the conditional handover configuration of the selected cell is applied and attempt is made to perform conditional handover; otherwise, the process of initiating transmission of the RRCReestablishmentRequest message to the selected cell is performed.

For another example, the network configures absolute time t7 and offsets, a suitable cell selected in the connection reestablishment procedure is a candidate cell for conditional handover, and t7 has been reached and/or t7+offset5 has not been exceeded. Then, the conditional handover configuration of the selected cell is applied and attempt is made to perform conditional handover; otherwise, the process of initiating transmission of the RRCReestablishmentRequest message to the selected cell is performed.

For another example, the network configures offset6 and absolute time t8, a suitable cell selected in the connection reestablishment procedure is a candidate cell for conditional handover, and a time T3 after the offset6 time length elapses upon reception of the first event has been reached and/or t8 has not been exceeded, the conditional handover configuration of the selected cell is applied and attempt is made to perform conditional handover; otherwise, the process of initiating transmission of the RRCReestablishmentRequest message to the selected cell is performed.

For another example, the network configures timer 5 and timer 6. Timer 5 is started upon reception of the configuration information containing the first event, and timer 6 is started after timer 5 expires. The suitable cell selected in the connection reestablishment procedure is a candidate cell for conditional handover. During running of timer 6, the conditional handover configuration of the selected cell is applied and attempt is made to perform conditional handover; otherwise, the process of initiating transmission of the RRCReestablishmentRequest message to the selected cell is performed.

For another example, the network-side device configures timer 7 and offset7. Timer 7 is started after an offset7 time elapses upon reception of the configuration information containing the first event by the terminal. The suitable cell selected in the connection reestablishment procedure is a candidate cell for conditional handover. During running of timer 7, the conditional handover configuration of the selected cell is applied and attempt is made to perform conditional handover; otherwise, the process of initiating transmission of the RRCReestablishmentRequest message to the selected cell is performed.

For another example, the network side configures timer 8 and offsets, and the terminal starts timer 8 after receiving the configuration information containing the first event, where the first time is an expiration time of timer 8, and the second time is a time T4 after a time with the length of offsets elapses upon expiration of timer 4. The suitable cell selected in the connection re-establishment procedure is a candidate cell for conditional handover. During a period from expiration of timer 8 to T4, the conditional handover configuration of the selected cell is applied and attempt is made to perform conditional handover; otherwise, the process of initiating transmission of RRCReestablishmentRequest message to the selected cell is performed.

Alternatively, the first event is configured to be a fifth time, a suitable cell selected in the connection reestablishment procedure is a candidate cell for conditional handover, and the fifth time has been reached. Then, the conditional handover configuration of the cell is applied and attempt is made to perform conditional handover; otherwise, the process of initiating transmission of the RRCReestablishmentRequest message is performed.

For example, the network configures absolute time t9, a suitable cell selected in the connection reestablishment procedure is a candidate cell for conditional handover, and t9 has been reached. Then, the conditional handover configuration of the selected cell is applied and attempt is made to perform conditional handover; otherwise, the process of initiating transmission of the RRCReestablishmentRequest message to the selected cell is performed.

For another example, the network configures timer 9, and the terminal starts the timer 9 after receiving the configuration from the network side. A suitable cell selected in the connection reestablishment procedure is a candidate cell for conditional handover, and if timer 9 expires, the conditional handover configuration of the selected cell is applied and attempt is made to perform conditional handover; otherwise, the process of initiating transmission of the RRCReestablishmentRequest message to the selected cell is performed.

For example, the first event is configured to be a sixth time, a suitable cell selected in the connection reestablishment procedure is a candidate cell for conditional handover, and the sixth time has not been exceeded. Then, the conditional handover configuration of the cell is applied and attempt is made to perform conditional handover; otherwise, the process of initiating transmission of the RRCReestablishmentRequest message is performed.

Alternatively, the network configures absolute time t10, a suitable cell selected in the connection reestablishment procedure is a candidate cell for conditional handover, and t10 has not been reached. Then, the conditional handover configuration of the selected cell is applied and attempt is made to perform conditional handover; otherwise, the process of initiating transmission of the RRCReestablishmentRequest message to the selected cell is performed.

For example, the network configures timer 10, and the terminal starts the timer 10 after receiving the configuration from the network side. A suitable cell selected in the connection reestablishment procedure is a candidate cell for conditional handover, and if timer 10 is still running, the conditional handover configuration of the selected cell is applied and attempt is made to perform conditional handover; otherwise, the process of initiating transmission of the RRCReestablishmentRequest message to the selected cell is performed.

### Embodiment 2

In this embodiment, a terminal performs cell reselection (RRC_CONNECTED) in a connection reestablishment procedure based on target configuration information.

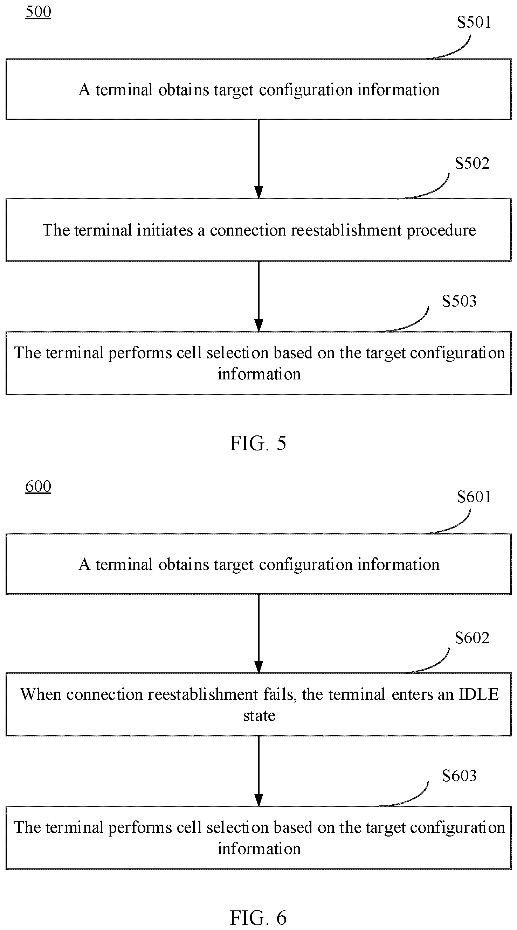

FIG. 5 is yet another schematic flowchart of a mobility management method according to an embodiment of this application. As shown in FIG. 5, the method 500 mainly includes the following steps.

S501: A terminal obtains target configuration information.

The target configuration information may include:
(1) First configuration information, where the first configuration information includes configuration information of conditional handover. The first configuration information is the same as the first configuration information in Embodiment 1. For details, refer to the related description in Embodiment 1.
(2) Second event, where the second event is used to indicate duration information of a target cell preferentially selected by the terminal in the cell selection procedure, the duration information may be a time period from a seventh time to an eighth time, or a time after a ninth time, or a time before a tenth time, and the duration information is configured per cell.

For example, the second event may be configured to be a time period from the seventh time to the eighth time.

For example, the network-side device configures absolute time t11 and t12 for a second event of a first target cell, where the seventh time is t11 and the eighth time is t12, and the time period is a time period from t11 to t12.

For another example, the network-side device configures absolute time t13 and offset9 for the second event of the first target cell, where the seventh time is t13 and the eighth time is t13+offset9, and the time period is a time period from t13 to t13+offset9.

For another example, the network-side device configures offset10 and absolute time t14 for the second event of the first target cell, where the seventh time is a time T5 after the offset10 time length elapses upon reception of configuration information containing the second event, the eighth time is t14, and the time period is a time period from T5 to t14.

The absolute time includes: coordinated universal time (Coordinated Universal Time, UTC), daylight saving time (Daylight Saving Time, DST), global positioning system (Global Positioning System, GPS) time, local time, and so on.

For another example, the network-side device configures timer 11 and timer 12 for the second event of the first target cell, and timer 11 is started upon reception of the configuration information containing the second event, and timer 12 is started after timer 11 expires, where the seventh time is an expiration time of timer 11, the eighth time is an expiration time of timer 12, and the time period is a time period in which timer 12 runs.

For another example, the network-side device configures timer 13 and offset11 for the second event of the first target cell, and the terminal starts timer 13 after an offset11 time elapses upon reception of the configuration information containing the second event, where the seventh time is a time after offset11 elapses, the eighth time is an expiration time of timer 13, and the time period is a time period in which timer 13 runs.

For another example, the network-side device configures timer 14 and offset 12 for the second event of the first target cell, and the terminal starts timer 14 after receiving the configuration information containing the second event, where the seventh time is an expiration time of timer 14, and the eighth time is a time T6 after a time with the length of offset12 elapses upon expiration of timer 12. The time period is a time period from expiration of timer 14 to T6.

For example, the second event may be configured to be a ninth time, for example, the network side configures absolute time t15, and the ninth time is t15. Another example is that the network side configures timer 15, and the terminal starts timer 15 when receiving a configuration from the network side. If the timer expires, it means that the ninth time has been reached.

For another example, the second event may be configured to be a tenth time, for example, the network side configures absolute time t16, and the tenth time is t16. Another example is that the network side configures timer 16, and the terminal starts timer 16 when receiving a configuration from the network side. If the timer is running, it means that the tenth time has not been reached.

S502: The terminal initiates a connection reestablishment procedure.

For example, the terminal initiates the connection reestablishment procedure when one of the following conditions occurs:
an RLF is detected;
a handover failure; and
a conditional handover failure.

The handover failure and the conditional handover failure include at least one of the following:
- T304 expires; and
- the second time expires.

For details, refer to the related descriptions in Embodiment 1.

S503: The terminal performs cell selection based on the target configuration information.

That the terminal performs cell selection based on the target configuration information may include:
if the target configuration information contains the first configuration information, preferentially selecting a conditional handover candidate cell satisfying a second condition, where the conditional handover candidate cell satisfying the second condition is the target cell.

The satisfying the second condition includes at least one of the following:
the first time has been reached and the second time has not been exceeded;
   the first time has been reached;
   the second time has not been exceeded;
   the seventh time has been reached and the eighth time has not been exceeded;
   the ninth time has been reached; and
the tenth time has not been exceeded.

That is, the first target cell is preferentially selected in a case that the current time is within the time period indicated by the duration information of the first target cell. For example, a candidate cell for which a time indicated by the duration information includes the current time is preferentially selected.

The current time being within the time period indicated by the duration information of the first target cell includes one of the following:
the current time has reached a first time of the first target cell and the current time has not exceeded a second time of the first target cell;
the current time has reached the first time of the first target cell;
the current time has not exceeded the second time of the first target cell;
the current time has reached a seventh time of the first target cell and the current time has not exceeded an eighth time of the first target cell;
the current time has reached a ninth time of the first target cell; and
the current time has not exceeded a tenth time of the first target cell.

The preferential selection includes at least one of the following:
- A frequency in which the first target cell is located is searched first, and if a cell with the strongest signal on the frequency is the first target cell and satisfies the definition of the suitable cell, the first target cell is selected.
- The frequency in which the target cell is located is searched first. If a cell with the strongest signal on the frequency is not the first target cell, a cell with the n-th strongest signal on the frequency is searched. If the cell with the n-th strongest signal is the first target cell and satisfies the definition of the suitable cell, the target cell is selected, where n is a positive integer greater than or equal to 2.
- If strongest cells on a plurality of frequency points satisfies the definition of the suitable cell, and the plurality of suitable cells contain the first target cell, the first target cell is selected.

The following uses "the first time has been reached and the second time has not been exceeded" and "the frequency in which the target cell is located is searched first, and if the cell with the strongest frequency is a conditional handover candidate cell that satisfies the second condition and satisfies the definition of the suitable cell, the target cell is selected" as examples to describe preferential selection, and the rest may be combined in pairs.

For example, the network configures duration information of the target cell to be absolute time t11 and t12. If t11 has been reached and t12 has not been exceeded, the frequency in which the target cell is located is searched first. If the cell with the strongest signal on the frequency is the target cell and satisfies the definition of suitable cell, the target cell is selected.

In this embodiment, if there are a plurality of target cells, the terminal selects the target cell with the longest target time. The target time is determined based on the first time and the second time or based on the seventh time and the eighth time.

Determining the target time based on the first time and the second time is used as an example. For example, the network configures absolute time t1 and t2, and the target time is t2-t1. For another example, the network configures absolute time t3 and offset1, and the target time is offset1. For another example, the network configures timer 1 and timer 2. Timer 1 is started upon reception of the conditional reconfiguration, and timer 2 is started after timer 1 expires. The target time is the length of timer 2.

A manner of determining the target time based on the seventh time and the eighth time is similar to a manner of determining the target time based on the first time and the second time, and details are not repeated herein.

### Embodiment 3

A difference between this embodiment and Embodiment 2 is that in this embodiment, the UE performs cell reselection in an IDLE state or an INACTIVE state.

FIG. 6 is yet another schematic flowchart of a mobility management method according to an embodiment of this application. As shown in FIG. 6, the mobility management method 600 mainly includes the following steps.

S601: A terminal obtains target configuration information.

The target configuration information includes:
(1) First configuration information, where the first configuration information includes conditional handover configuration information. The first configuration information is the same as the first configuration information in Embodiment 1, and details are not repeated herein.
(2) Second event, where the second event is used to indicate duration information of a target cell preferentially selected by the terminal in the cell selection procedure, the duration information may be a time period from a seventh time to an eighth time, or a time after a ninth time, or a time before a tenth time, and the duration information is configured per cell.

The second event is the same as the second event in Embodiment 2, and details are not repeated herein.

S602: When connection reestablishment fails, the terminal enters an IDLE state.

The connection reestablishment failure includes at least one of the following:
T311 expires, and UE fails to select a suitable cell.
T301 expires, and UE fails to receive a response (RRC Re-establishment or RRC Setup) sent by the network.

S603: The terminal performs cell selection based on the target configuration information.

That the terminal performs cell selection based on the target configuration information includes:
if the target configuration information contains the first configuration information, preferentially selecting a conditional handover candidate cell satisfying a second condition, where the conditional handover candidate cell satisfying the second condition is the target cell.

The satisfying the second condition includes at least one of the following:
the first time has been reached and the second time has not been exceeded;
the first time has been reached;
the second time has not been exceeded;
the seventh time has been reached and the eighth time has not been exceeded;
the ninth time has been reached; and
the tenth time has not been exceeded.

That is, when the current time is within the time period indicated by the duration information of the first target cell, the first target cell is preferentially selected. For example, the candidate cell for which a time indicated by the duration information includes the current time is preferentially selected.

The current time being within the time period indicated by the duration information of the first target cell includes one of the following:
the current time has reached a first time of the first target cell and the current time has not exceeded a second time of the first target cell;
the current time has reached the first time of the first target cell;
the current time has not exceeded the second time of the first target cell;
the current time has reached a seventh time of the first target cell and the current time has not exceeded an eighth time of the first target cell;
the current time has reached a ninth time of the first target cell; and
the current time has not exceeded a tenth time of the first target cell.

The preferential selection includes at least one of the following:
- A frequency in which the target cell is located is searched first, and if a cell with the strongest signal on the frequency is the target cell and satisfies the definition of the suitable cell, the cell is selected.
- The frequency in which the target cell is located is searched first. If a cell with the strongest signal on the frequency is not the target cell, a cell with the n-th strongest signal on the frequency is searched. If the cell with the n-th strongest signal is the target cell and satisfies the definition of the suitable cell, the cell is selected, where n is a positive integer greater than or equal to 2.
- If strongest cells on a plurality of frequency points satisfies the definition of the suitable cell, and the plurality of suitable cells contain the target cell, the cell is selected.

If there are a plurality of target cells, the terminal selects the target cell with the longest target time. The target time is determined based on the first time and the second time or based on the seventh time and the eighth time.

The cell selection performed by the terminal based on the target configuration information in S603 is the same as the cell selection performed by the terminal based on the target configuration information in Embodiment 2. For details, refer to the descriptions of Embodiment 2. Details are not repeated herein.

It should be noted that, for the mobility management method provided by the embodiments of this application, the execution body may be a mobility management apparatus, or a control module for executing the mobility management method in the mobility management apparatus. In the embodiments of this application, the mobility management apparatus provided by the embodiments of this application is described by using the mobility management method being executed by the mobility management apparatus as an example.

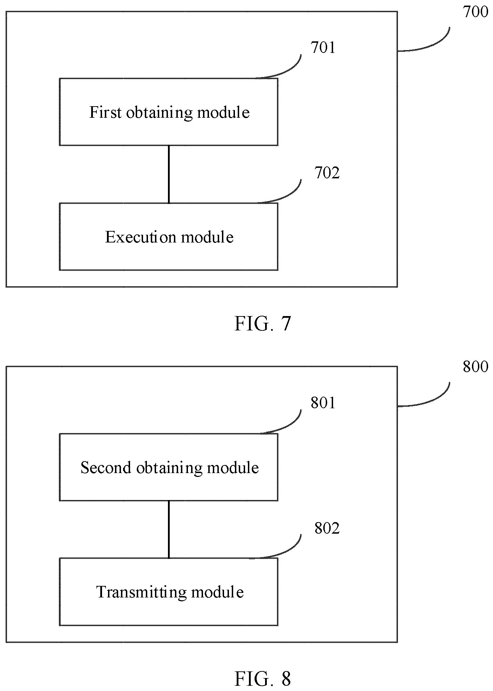

FIG. 7 is a schematic structural diagram of a mobility management apparatus according to an embodiment of this application. As shown in FIG. 7, the apparatus 700 mainly includes: a first obtaining module 701, configured to obtain target configuration information, where the target configuration information includes duration information of a plurality of candidate cells; and an execution module 702, configured to perform at least one of a cell selection procedure or a connection reestablishment procedure based on the target configuration information.

In a possible implementation, that the execution module 702 performs the cell selection procedure based on the target configuration information includes: in a case that a current time is within a time period indicated by duration information of a first target cell, preferentially selecting the first target cell in the cell selection procedure; and/or that the execution module 702 performs the connection reestablishment procedure based on the target configuration information includes: in a case that the current time is within a time period indicated by duration information of a second target cell, applying a conditional reconfiguration for the second target cell in the connection reestablishment procedure, where the first target cell is one of the plurality of candidate cells, and the second target cell is one of the plurality of candidate cells.

In a possible implementation, the target configuration information includes at least one of the following:
first configuration information, where the first configuration information includes conditional reconfigurations of the plurality of candidate cells;
second configuration information, where the second configuration information is used to indicate using a first target candidate cell as the second target cell and applying the conditional reconfiguration for the second target cell in a case that the current time is within a time period indicated by duration information of the first target candidate cell, where the first target candidate cell is a candidate cell selected by the terminal in the connection reestablishment procedure;
a first event, where the first event indicates the terminal to apply the conditional reconfiguration for the second target cell in the connection reestablishment procedure in a case that the current time is within the time period indicated by the duration information of the second target cell, where the time period indicated by the duration information of the second target cell includes one of the following: a time period from a third time to a fourth time, a time after a fifth time, and a time before a sixth time; and
a second event, where the second event indicates the terminal to preferentially select the first target cell in the cell selection procedure in a case that the current time is within the time period indicated by the duration information of the first target cell, where the time period indicated by the duration information of the first target cell includes one of the following: a time period from a seventh time to an eighth time, a time after a ninth time, and a time before a tenth time.

In a possible implementation, the first configuration information includes at least one of the following:
a plurality of candidate cells, where the plurality of candidate cells are conditional reconfiguration candidate cells for conditional handover;
a third event for each candidate cell, where the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell includes one of the following: a time period from a first time to a second time, a time after the first time, and a time before the second time; and
a fourth event for each candidate cell, where the fourth event is used to trigger a conditional handover.

In a possible implementation, the fourth event includes at least one of the following:
a trigger event based on at least one of signal strength or signal quality; and
a location-based trigger event.

In a possible implementation, the applying the conditional reconfiguration for the second target cell in the connection reestablishment procedure in a case that the current time is within the time period indicated by the duration information of the second target cell includes:
in a case that the target configuration information includes the second configuration information, that a cell selected in the connection reestablishment procedure is a third target candidate cell in the plurality of candidate cells, and that the current time is within a time period indicated by duration information of the third target candidate cell, using the third target candidate cell as the second target cell, and applying the conditional reconfiguration for the second target cell.

In a possible implementation, the execution module 702 is further configured to:
in a case that the target configuration information does not include the second configuration information, or that the current time is not within a time period indicated by duration information of a third target candidate cell, or that a cell selected in the connection reestablishment procedure is not one of the plurality of candidate cells, perform a process of initiating a connection establishment request.

In a possible implementation, the current time being within the time period indicated by the duration information of the second target cell includes one of the following:
the current time has reached a first time of the second target cell and has not exceeded a second time of the second target cell;
the current time has reached the first time of the second target cell;
the current time has not exceeded the second time of the second target cell;
the current time has reached a third time of the second target cell but has not exceeded a fourth time of the second target cell;
the current time has reached a fifth time of the second target cell; and
the current time has not exceeded a sixth time of the second target cell.

In a possible implementation, the preferentially selecting the first target cell in a case that the current time is within the time period indicated by the duration information of the first target cell includes:
preferentially selecting a candidate cell for which a time indicated by the duration information includes the current time.

In a possible implementation, the current time being within the time period indicated by the duration information of the first target cell includes one of the following:
the current time has reached a first time of the first target cell and the current time has not exceeded a second time of the first target cell;
the current time has reached the first time of the first target cell;
the current time has not exceeded the second time of the first target cell;
the current time has reached a seventh time of the first target cell and the current time has not exceeded an eighth time of the first target cell;
the current time has reached a ninth time of the first target cell; and
the current time has not exceeded a tenth time of the first target cell.

In a possible implementation, the preferentially selecting the first target cell in the cell selection procedure in a case that the current time is within the time period indicated by the duration information of the first target cell includes at least one of the following:
preferentially searching for a target frequency in which a fourth target candidate cell is located; and in a case that a cell with a strongest signal searched on the target frequency is a fourth target candidate cell and that the fourth target candidate cell is a suitable cell, selecting the fourth target candidate cell as the first target cell, where the fourth target candidate cell is the candidate cell for which the time indicated by its duration information includes the current time;
preferentially searching for a target frequency in which a fourth target candidate cell is located; and in a case that a cell with a strongest signal searched on the target frequency is not the fourth target candidate cell, that a cell with the n-th strongest signal searched on the target frequency is the fourth target candidate cell, and that the fourth target candidate cell is a suitable cell, selecting the fourth target candidate cell as the first target cell, where n is a positive integer greater than or equal to 2, and the fourth target candidate cell is the candidate cell for which the time indicated by its duration information includes the current time; and
in a case that cells with the strongest signals searched on a plurality of frequency points include a plurality of suitable cells, and that the plurality of suitable cells include the fourth target candidate cell, selecting the fourth target candidate cell included in the plurality of suitable cells as the first target cell, where the fourth target candidate cell is the candidate cell for which the time indicated by its duration information includes the current time.

In a possible implementation, the preferentially searching for a target frequency in which a fourth target candidate cell is located includes:
in a case that there are a plurality of fourth target candidate cells, preferentially searching for a frequency in which a fourth target candidate cell with the longest target time in the plurality of fourth target candidate cells is located, where the target time is determined based on a first time and second time of the fourth target candidate cell or based on a seventh time and an eighth time of the fourth target candidate cell.

In a possible implementation, the selecting the fourth target candidate cell as the first target cell includes:
in a case that there are a plurality of fourth target candidate cells, selecting a fourth target candidate cell with the longest target time in the plurality of fourth target candidate cells as the first target cell, where the target time is determined based on a first time and second time of the fourth target candidate cell or based on a seventh time and an eighth time of the fourth target candidate cell.

In a possible implementation, the cell selection includes: cell selection in an idle state or cell selection during connection reestablishment.

In a possible implementation, the execution module 702 is further configured to:
before the connection reestablishment procedure is performed based on the target configuration information, initiate the connection reestablishment procedure in a case that one of the following events occurs:
a radio link failure RLF is detected;
a handover fails; and
a conditional handover fails.

The mobility management apparatus in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The mobility management apparatus in this embodiment of this application may be an apparatus with an operating system. The operating system may be an Android (Android) operating system, an iOS operating system, or other possible operating systems, and is not specifically limited in the embodiments of this application.

The mobility management apparatus provided in this embodiment of this application is capable of implementing the processes implemented by the terminal in the method embodiments in FIG. 2 to FIG. 7, with the same technical effects achieved. To avoid repetition, details are not described herein again.

FIG. 8 is another schematic structural diagram of a mobility management apparatus according to an embodiment of this application. As shown in FIG. 8, the apparatus 800 mainly includes: a second obtaining module 801, configured to obtain target configuration information for a terminal, where the target configuration information includes duration information of a plurality of candidate cells, and indicates the terminal to perform a connection reestablishment procedure and/or a cell selection procedure based on the duration information; and a transmitting module 802, configured to transmit the target configuration information to the terminal.

In a possible implementation, the target configuration information includes at least one of the following:
first configuration information, where the first configuration information includes conditional reconfigurations of the plurality of candidate cells;
second configuration information, where the second configuration information is used to indicate using a first target candidate cell as the second target cell and applying the conditional reconfiguration for the second target cell in a case that the current time is within a time period indicated by duration information of the first target candidate cell, where the first target candidate cell is a candidate cell selected by the terminal in the connection reestablishment procedure;
a first event, where the first event indicates the terminal to apply the conditional reconfiguration for the second target cell in the connection reestablishment procedure in a case that the current time is within the time period indicated by the duration information of the second target cell, where the time period indicated by the duration information of the second target cell includes one of the following: a time period from a third time to a fourth time, a time after a fifth time, and a time before a sixth time; and
a second event, where the second event indicates the terminal to preferentially select the first target cell in the cell selection procedure in a case that the current time is within the time period indicated by the duration information of the first target cell, where the time period indicated by the duration information of the first target cell includes one of the following: a time period from a seventh time to an eighth time, a time after a ninth time, and a time before a tenth time.

In a possible implementation, the first configuration information includes at least one of the following:
a plurality of candidate cells, where the plurality of candidate cells are conditional reconfiguration candidate cells for conditional handover;
a third event for each candidate cell, where the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell includes one of the following: a time period from a first time to a second time, a time after the first time, and a time before the second time; and
a fourth event for each candidate cell, where the fourth event is used to trigger a conditional handover.

In a possible implementation, the fourth event includes at least one of the following:
a trigger event based on at least one of signal strength or signal quality; and
a location-based trigger event.

The mobility management apparatus in this embodiment of this application may be an apparatus with an operating system. The operating system may be an Android (Android) operating system, an iOS operating system, or other possible operating systems, and is not specifically limited in the embodiments of this application.

The mobility management apparatus provided in this embodiment of this application is capable of implementing the processes implemented by the network-side device or the network in the method embodiments in FIG. 2 to FIG. 7, with the same technical effects achieved. To avoid repetition, details are not described herein again.

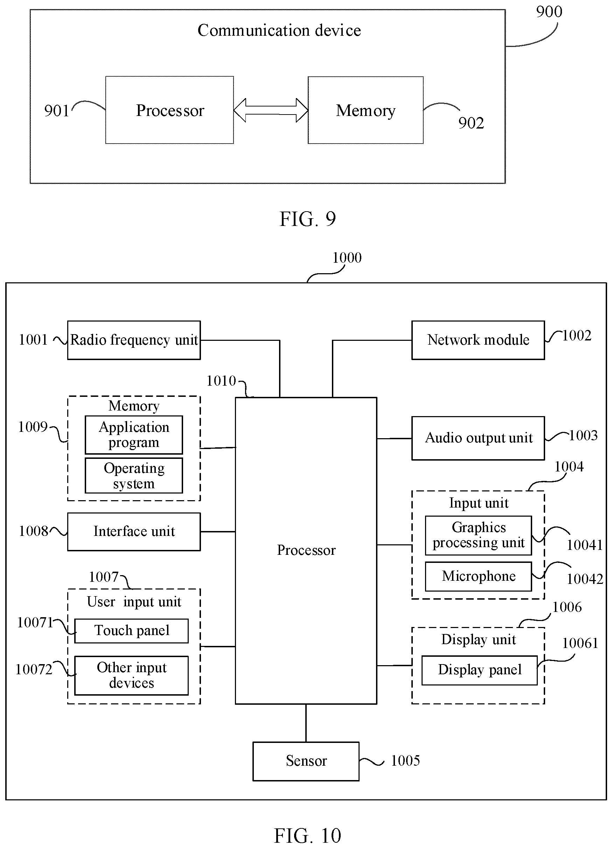

Optionally, as shown in FIG. 9, an embodiment of this application further provides a communication device 900, including a processor 901, a memory 902, and a program or instructions stored in the memory 902 and capable of running on the processor 901. For example, when the communication device 900 is a terminal and when the program or the instructions are executed by the processor 901, the processes of the foregoing embodiments of the mobility management method 200 are implemented, with the same technical effects achieved. When the communication device 900 is a network-side device and when the program or instructions are executed by the processor 901, the processes of the foregoing embodiments of the mobility management method 300 are implemented, with the same technical effects achieved. To avoid repetition, details are not described herein again.

An embodiment of this application further provides a terminal, including a processor and a communication interface, the processor is configured to implement the processes of the foregoing embodiments of the mobility management method 200, and the communication interface is configured to communicate with the network-side device. The terminal embodiments correspond to the foregoing terminal-side method embodiments, and the implementation processes and implementations of the foregoing method embodiments can be applied to the terminal embodiments, with the same technical effects achieved. Specifically, FIG. 10 is a schematic diagram of a hardware structure of a terminal for implementing the embodiments of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 10 does not constitute any limitation on the terminal. The terminal may include more or fewer components than those shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 may include a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a j oystick, and the like. Details are not described herein.

In this embodiment of this application, the radio frequency unit 1001 receives downlink data from a network-side device, and then sends the downlink data to the processor 1010 for processing; and also sends uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may include a program or instruction storage area and a data storage area. The program or instruction storage area may store an operating system, an application program or instruction required by at least one function (for example, a sound playback function or an image playback function), and the like. In addition, the memory 1009 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 1010 may include one or more processing units. Optionally, an application processor and a modem processor may be integrated in the processor 1010. The application processor primarily processes an operating system, user interfaces, application programs or instructions, and the like. The modem processor primarily processes radio communication, for example, being a baseband processor. It can be understood that the modem processor may alternatively be not integrated in the processor 1010.

The processor 1010 is configured to:
obtain target configuration information, where the target configuration information includes duration information of a plurality of candidate cells; and
perform at least one of a cell selection procedure or a connection reestablishment procedure based on the target configuration information.

An embodiment of this application further provides a network-side device, including a processor and a communication interface, the processor is configured to implement the processes of the foregoing embodiments of the mobility management method 300, and the communication interface is configured to communicate with the terminal. The network-side device embodiments correspond to the foregoing network-side device-side method embodiments, and the implementation processes and implementations of the foregoing method embodiments can be applied to the network-side device embodiments, with the same technical effects achieved.

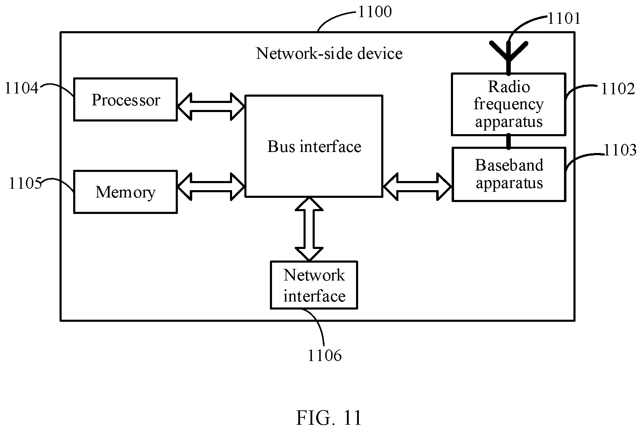

Specifically, an embodiment of this application further provides a network-side device. As shown in FIG. 11, the network device 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes to-be-sent information, and sends the information to the radio frequency apparatus 1102; and the radio frequency apparatus 1102 processes the received information and then sends the information out by using the antenna 1101.

The frequency band processing apparatus may be located in the baseband apparatus 1103. The method performed by the network-side device in the foregoing embodiments may be implemented in the baseband apparatus 1103, and the baseband apparatus 1103 includes a processor 1104 and a memory 1105.

The baseband apparatus 1103 may include, for example, at least one baseband processing unit, where a plurality of chips are disposed on the baseband processing unit. As shown in FIG. 11, one of the chips is, for example, the processor 1104, connected to the memory 1105, to invoke a program in the memory 1105 to perform the operation of the network device shown in the foregoing method embodiment.

The baseband apparatus 1103 may further include a network interface 1106, configured to exchange information with the radio frequency apparatus 1102, where the interface is, for example, a common public radio interface (common public radio interface, CPRI for short).

Specifically, the network-side device in this embodiment of the present invention further includes: instructions or a program stored in the memory 1105 and capable of running on the processor 1104. The processor 1104 invokes the instructions or program in the memory 1105 to execute the method executed by the modules shown in FIG. 8, with the same technical effects achieved. To avoid repetition, details are not repeated herein.

An embodiment of this application further provides a readable storage medium, where a program or an instruction is stored in the readable storage medium. When the program or the instruction is executed by a processor, the processes of the foregoing embodiments of the mobility management methods 200 and 300 are implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the mobility management methods 200 and 300, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-transitory and/or non-volatile storage medium, and when being executed by at least one processor, the computer program/program product is configured to implement the processes of the foregoing embodiments of the mobility management methods 200 and 300, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A mobility management method, comprising:
obtaining, by a terminal, target configuration information, wherein the target configuration information comprises duration information of a plurality of candidate cells; and
performing, by the terminal, at least one of a cell selection procedure or a connection reestablishment procedure based on the target configuration information.

2. The method according to claim 1, wherein
the performing, by the terminal, a cell selection procedure based on the target configuration information comprises: in a case that a current time is within a time period indicated by duration information of a first target cell, preferentially selecting, by the terminal, the first target cell in the cell selection procedure; and/or
the performing, by the terminal, a connection reestablishment procedure based on the target configuration information comprises: in a case that the current time is within a time period indicated by duration information of a second target cell, applying, by the terminal, a conditional reconfiguration for the second target cell in the connection reestablishment procedure, wherein the first target cell is one of the plurality of candidate cells, and the second target cell is one of the plurality of candidate cells.

3. The method according to claim 2, wherein the target configuration information comprises at least one of the following:
first configuration information, wherein the first configuration information comprises conditional reconfigurations of the plurality of candidate cells;
second configuration information, wherein the second configuration information is used to indicate using a first target candidate cell as the second target cell and applying the conditional reconfiguration for the second target cell in a case that the current time is within a time period indicated by duration information of the first target candidate cell, wherein the first target candidate cell is a candidate cell selected by the terminal in the connection reestablishment procedure;
a first event, wherein the first event indicates the terminal to apply the conditional reconfiguration for the second target cell in the connection reestablishment procedure in a case that the current time is within the time period indicated by the duration information of the second target cell, wherein the time period indicated by the duration information of the second target cell comprises one of the following: a time period from a third time to a fourth time, a time after a fifth time, and a time before a sixth time; and
a second event, wherein the second event indicates the terminal to preferentially select the first target cell in the cell selection procedure in a case that the current time is within the time period indicated by the duration information of the first target cell, wherein the time period indicated by the duration information of the first target cell comprises one of the following: a time period from a seventh time to an eighth time, a time after a ninth time, and a time before a tenth time.

4. The method according to claim 3, wherein the first configuration information comprises at least one of the following:
a plurality of candidate cells, wherein the plurality of candidate cells are conditional reconfiguration candidate cells for conditional handover;
a third event for each candidate cell, wherein the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell comprises one of the following: a time period from a first time to a second time, a time after the first time, and a time before the second time; and
a fourth event for each candidate cell, wherein the fourth event is used to trigger a conditional handover.

5. The method according to claim 4, wherein the fourth event comprises at least one of the following:
a trigger event based on at least one of signal strength or signal quality; and
a location-based trigger event.

6. The method according to claim 4, wherein the applying, by the terminal, the conditional reconfiguration for the second target cell in the connection reestablishment procedure in a case that the current time is within the time period indicated by the duration information of the second target cell comprises:
in a case that the target configuration information comprises the second configuration information, that a cell selected by the terminal in the connection reestablishment procedure is a third target candidate cell in the plurality of candidate cells, and that the current time is within a time period indicated by duration information of the third target candidate cell, using the third target candidate cell as the second target cell, and applying the conditional reconfiguration for the second target cell.

7. The method according to claim 4, wherein the method further comprises:
in a case that the target configuration information does not comprise the second configuration information, or that the current time is not within a time period indicated by duration information of a third target candidate cell, or that a cell selected in the connection reestablishment procedure is not one of the plurality of candidate cells, performing a process of initiating a connection establishment request.

8. The method according to claim 4, wherein the current time being within the time period indicated by the duration information of the second target cell comprises one of the following:
the current time has reached a first time of the second target cell and has not exceeded a second time of the second target cell;
the current time has reached the first time of the second target cell;
the current time has not exceeded the second time of the second target cell;
the current time has reached a third time of the second target cell but has not exceeded a fourth time of the second target cell;
the current time has reached a fifth time of the second target cell; and
the current time has not exceeded a sixth time of the second target cell.

9. The method according to claim 4, wherein the preferentially selecting the first target cell in a case that the current time is within the time period indicated by the duration information of the first target cell comprises:
preferentially selecting a candidate cell for which a time indicated by the duration information comprises the current time.

10. The method according to claim 9, wherein the current time being within the time period indicated by the duration information of the first target cell comprises one of the following:
the current time has reached a first time of the first target cell and the current time has not exceeded a second time of the first target cell;
the current time has reached the first time of the first target cell;
the current time has not exceeded the second time of the first target cell;
the current time has reached a seventh time of the first target cell and the current time has not exceeded an eighth time of the first target cell;
the current time has reached a ninth time of the first target cell; and
the current time has not exceeded a tenth time of the first target cell.

11. The method according to claim 9, wherein the preferentially selecting, by the terminal, the first target cell in the cell selection procedure in a case that the current time is within the time period indicated by the duration information of the first target cell comprises at least one of the following:
preferentially searching for a target frequency in which a fourth target candidate cell is located; and in a case that a cell with a strongest signal searched on the target frequency is a fourth target candidate cell and that the fourth target candidate cell is a suitable cell, selecting the fourth target candidate cell as the first target cell, wherein the fourth target candidate cell is the candidate cell for which the time indicated by its duration information comprises the current time;
preferentially searching for a target frequency in which a fourth target candidate cell is located; and in a case that a cell with a strongest signal searched on the target frequency is not the fourth target candidate cell, that a cell with the n-th strongest signal searched on the target frequency is the fourth target candidate cell, and that the fourth target candidate cell is a suitable cell, selecting the fourth target candidate cell as the first target cell, wherein n is a positive integer greater than or equal to 2, and the fourth target candidate cell is the candidate cell for which the time indicated by its duration information comprises the current time; and
in a case that cells with the strongest signals searched on a plurality of frequency points comprise a plurality of suitable cells, and that the plurality of suitable cells comprise the fourth target candidate cell, selecting the fourth target candidate cell comprised in the plurality of suitable cells as the first target cell, wherein the fourth target candidate cell is the candidate cell for which the time indicated by its duration information comprises the current time.

12. The method according to claim 11, wherein the preferentially searching for a target frequency in which a fourth target candidate cell is located comprises:
in a case that there are a plurality of fourth target candidate cells, preferentially searching for a frequency in which a fourth target candidate cell with the longest target time in the plurality of fourth target candidate cells is located, wherein the target time is determined based on a first time and second time of the fourth target candidate cell or based on a seventh time and an eighth time of the fourth target candidate cell.

13. The method according to claim 11, wherein the selecting the fourth target candidate cell as the first target cell comprises:
in a case that there are a plurality of fourth target candidate cells, selecting a fourth target candidate cell with the longest target time in the plurality of fourth target candidate cells as the first target cell, wherein the target time is determined based on a first time and second time of the fourth target candidate cell or based on a seventh time and an eighth time of the fourth target candidate cell.

14. The method according to any one of claims 1 to 13, wherein the cell selection comprises cell selection in an idle state or an inactive state or cell selection during connection reestablishment.

15. The method according to any one of claims 1 to 13, wherein before the performing, by the terminal, a connection reestablishment procedure based on the target configuration information, the method further comprises:
initiating, by the terminal, the connection reestablishment procedure in a case that one of the following events occurs:
a radio link failure RLF is detected;
a handover fails; and
a conditional handover fails.

16. A mobility management method, comprising:
sending, by a network-side device, target configuration information to a terminal, wherein the target configuration information comprises duration information of a plurality of candidate cells, and indicates the terminal to perform a connection reestablishment procedure and/or a cell selection procedure based on the duration information.

17. The method according to claim 16, wherein the target configuration information comprises at least one of the following:
first configuration information, wherein the first configuration information comprises conditional reconfigurations of the plurality of candidate cells;
second configuration information, wherein the second configuration information is used to indicate using a first target candidate cell as the second target cell and applying the conditional reconfiguration for the second target cell in a case that the current time is within a time period indicated by duration information of the first target candidate cell, wherein the first target candidate cell is a candidate cell selected by the terminal in the connection reestablishment procedure;
a first event, wherein the first event indicates the terminal to apply the conditional reconfiguration for the second target cell in the connection reestablishment procedure in a case that the current time is within the time period indicated by the duration information of the second target cell, wherein the time period indicated by the duration information of the second target cell comprises one of the following: a time period from a third time to a fourth time, a time after a fifth time, and a time before a sixth time; and
a second event, wherein the second event indicates the terminal to preferentially select the first target cell in the cell selection procedure in a case that the current time is within the time period indicated by the duration information of the first target cell, wherein the time period indicated by the duration information of the first target cell comprises one of the following: a time period from a seventh time to an eighth time, a time after a ninth time, and a time before a tenth time.

18. The method according to claim 17, wherein the first configuration information comprises at least one of the following:
a plurality of candidate cells, wherein the plurality of candidate cells are conditional reconfiguration candidate cells for conditional handover;
a third event for each candidate cell, wherein the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell comprises one of the following: a time period from a first time to a second time, a time after the first time, and a time before the second time; and
a fourth event for each candidate cell, wherein the fourth event is used to trigger a conditional handover.

19. The method according to claim 18, wherein the fourth event comprises at least one of the following:
a trigger event based on at least one of signal strength or signal quality; and
a location-based trigger event.

20. A mobility management apparatus, comprising:
a first obtaining module, configured to obtain target configuration information, wherein the target configuration information comprises duration information of a plurality of candidate cells; and
an execution module, configured to perform at least one of a cell selection procedure or a connection reestablishment procedure based on the target configuration information.

21. The apparatus according to claim 20, wherein
that the execution module performs the cell selection procedure based on the target configuration information comprises: in a case that a current time is within a time period indicated by duration information of a first target cell, preferentially selecting the first target cell in the cell selection procedure; and/or
that the execution module performs the connection reestablishment procedure based on the target configuration information comprises: in a case that the current time is within a time period indicated by duration information of a second target cell, applying a conditional reconfiguration for the second target cell in the connection reestablishment procedure, wherein the first target cell is one of the plurality of candidate cells, and the second target cell is one of the plurality of candidate cells.

22. The apparatus according to claim 21, wherein the target configuration information comprises at least one of the following:
first configuration information, wherein the first configuration information comprises conditional reconfigurations of the plurality of candidate cells;
second configuration information, wherein the second configuration information is used to indicate using a first target candidate cell as the second target cell and applying the conditional reconfiguration for the second target cell in a case that the current time is within a time period indicated by duration information of the first target candidate cell, wherein the first target candidate cell is a candidate cell selected by the terminal in the connection reestablishment procedure;
a first event, wherein the first event indicates the terminal to apply the conditional reconfiguration for the second target cell in the connection reestablishment procedure in a case that the current time is within the time period indicated by the duration information of the second target cell, wherein the time period indicated by the duration information of the second target cell comprises one of the following: a time period from a third time to a fourth time, a time after a fifth time, and a time before a sixth time; and
a second event, wherein the second event indicates the terminal to preferentially select the first target cell in the cell selection procedure in a case that the current time is within the time period indicated by the duration information of the first target cell, wherein the time period indicated by the duration information of the first target cell comprises one of the following: a time period from a seventh time to an eighth time, a time after a ninth time, and a time before a tenth time.

23. The apparatus according to claim 22, wherein the first configuration information comprises at least one of the following:
a plurality of candidate cells, wherein the plurality of candidate cells are conditional reconfiguration candidate cells for conditional handover;
a third event for each candidate cell, wherein the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell comprises one of the following: a time period from a first time to a second time, a time after the first time, and a time before the second time; and
a fourth event for each candidate cell, wherein the fourth event is used to trigger a conditional handover.

24. The apparatus according to claim 23, wherein the fourth event comprises at least one of the following:
a trigger event based on at least one of signal strength or signal quality; and
a location-based trigger event.

25. The apparatus according to claim 23, wherein the applying the conditional reconfiguration for the second target cell in the connection reestablishment procedure in a case that the current time is within the time period indicated by the duration information of the second target cell comprises:
in a case that the target configuration information comprises the second configuration information, that a cell selected in the connection reestablishment procedure is a third target candidate cell in the plurality of candidate cells, and that the current time is within a time period indicated by duration information of the third target candidate cell, using the third target candidate cell as the second target cell, and applying the conditional reconfiguration for the second target cell.

26. The apparatus according to claim 23, wherein the execution module is further configured to:
in a case that the target configuration information does not comprise the second configuration information, or that the current time is not within a time period indicated by duration information of a third target candidate cell, or that a cell selected in the connection reestablishment procedure is not one of the plurality of candidate cells, perform a process of initiating a connection establishment request.

27. The apparatus according to claim 23, wherein the current time being within the time period indicated by the duration information of the second target cell comprises one of the following:
the current time has reached a first time of the second target cell and has not exceeded a second time of the second target cell;
the current time has reached the first time of the second target cell;
the current time has not exceeded the second time of the second target cell;
the current time has reached a third time of the second target cell but has not exceeded a fourth time of the second target cell;
the current time has reached a fifth time of the second target cell; and
the current time has not exceeded a sixth time of the second target cell.

28. The apparatus according to claim 23, wherein the preferentially selecting the first target cell in a case that the current time is within the time period indicated by the duration information of the first target cell comprises:
preferentially selecting a candidate cell for which a time indicated by the duration information comprises the current time.

29. The apparatus according to claim 28, wherein the current time being within the time period indicated by the duration information of the first target cell comprises one of the following:
the current time has reached a first time of the first target cell and the current time has not exceeded a second time of the first target cell;
the current time has reached the first time of the first target cell;
the current time has not exceeded the second time of the first target cell;
the current time has reached a seventh time of the first target cell and the current time has not exceeded an eighth time of the first target cell;
the current time has reached a ninth time of the first target cell; and
the current time has not exceeded a tenth time of the first target cell.

30. The apparatus according to claim 28, wherein the preferentially selecting the first target cell in the cell selection procedure in a case that the current time is within the time period indicated by the duration information of the first target cell comprises at least one of the following:
preferentially searching for a target frequency in which a fourth target candidate cell is located; and in a case that a cell with a strongest signal searched on the target frequency is a fourth target candidate cell and that the fourth target candidate cell is a suitable cell, selecting the fourth target candidate cell as the first target cell, wherein the fourth target candidate cell is the candidate cell for which the time indicated by its duration information comprises the current time;
preferentially searching for a target frequency in which a fourth target candidate cell is located; and in a case that a cell with a strongest signal searched on the target frequency is not the fourth target candidate cell, that a cell with the n-th strongest signal searched on the target frequency is the fourth target candidate cell, and that the fourth target candidate cell is a suitable cell, selecting the fourth target candidate cell as the first target cell, wherein n is a positive integer greater than or equal to 2, and the fourth target candidate cell is the candidate cell for which the time indicated by its duration information comprises the current time; and
in a case that cells with the strongest signals searched on a plurality of frequency points comprise a plurality of suitable cells, and that the plurality of suitable cells comprise the fourth target candidate cell, selecting the fourth target candidate cell comprised in the plurality of suitable cells as the first target cell, wherein the fourth target candidate cell is the candidate cell for which the time indicated by its duration information comprises the current time.

31. The apparatus according to claim 30, wherein the preferentially searching for a target frequency in which a fourth target candidate cell is located comprises:
in a case that there are a plurality of fourth target candidate cells, preferentially searching for a frequency in which a fourth target candidate cell with the longest target time in the plurality of fourth target candidate cells is located, wherein the target time is determined based on a first time and second time of the fourth target candidate cell or based on a seventh time and an eighth time of the fourth target candidate cell.

32. The apparatus according to claim 30, wherein the selecting the fourth target candidate cell as the first target cell comprises:
in a case that there are a plurality of fourth target candidate cells, selecting a fourth target candidate cell with the longest target time in the plurality of fourth target candidate cells as the first target cell, wherein the target time is determined based on a first time and second time of the fourth target candidate cell or based on a seventh time and an eighth time of the fourth target candidate cell.

33. The apparatus according to any one of claims 20 to 32, wherein the cell selection comprises cell selection in an idle state or cell selection during connection reestablishment.

34. The apparatus according to any one of claims 20 to 32, wherein the execution module is further configured to:
before the connection reestablishment procedure is performed based on the target configuration information, initiate the connection reestablishment procedure in a case that one of the following events occurs:
a radio link failure RLF is detected;
a handover fails; and
a conditional handover fails.

35. A mobility management apparatus, comprising:
a second obtaining module, configured to obtain target configuration information for a terminal, wherein the target configuration information comprises duration information of a plurality of candidate cells, and indicates the terminal to perform a connection reestablishment procedure and/or a cell selection procedure based on the duration information; and
a transmitting module, configured to transmit the target configuration information to the terminal.

36. The apparatus according to claim 35, wherein the target configuration information comprises at least one of the following:
first configuration information, wherein the first configuration information comprises conditional reconfigurations of the plurality of candidate cells;
second configuration information, wherein the second configuration information is used to indicate using a first target candidate cell as the second target cell and applying the conditional reconfiguration for the second target cell in a case that the current time is within a time period indicated by duration information of the first target candidate cell, wherein the first target candidate cell is a candidate cell selected by the terminal in the connection reestablishment procedure;
a first event, wherein the first event indicates the terminal to apply the conditional reconfiguration for the second target cell in the connection reestablishment procedure in a case that the current time is within the time period indicated by the duration information of the second target cell, wherein the time period indicated by the duration information of the second target cell comprises one of the following: a time period from a third time to a fourth time, a time after a fifth time, and a time before a sixth time; and
a second event, wherein the second event indicates the terminal to preferentially select the first target cell in the cell selection procedure in a case that the current time is within the time period indicated by the duration information of the first target cell, wherein the time period indicated by the duration information of the first target cell comprises one of the following: a time period from a seventh time to an eighth time, a time after a ninth time, and a time before a tenth time.

37. The apparatus according to claim 36, wherein the first configuration information comprises at least one of the following:
a plurality of candidate cells, wherein the plurality of candidate cells are conditional reconfiguration candidate cells for conditional handover;
a third event for each candidate cell, wherein the third event is used to trigger a conditional handover, and the third event indicates the terminal, in a case that the second target candidate cell meets a fourth event, to perform a conditional handover within a time period indicated by duration information of a second target candidate cell, the second target candidate cell is one of the plurality of candidate cells, and the time period indicated by the duration information of the second target candidate cell comprises one of the following: a time period from a first time to a second time, a time after the first time, and a time before the second time; and
a fourth event for each candidate cell, wherein the fourth event is used to trigger a conditional handover.

38. The apparatus according to claim 37, wherein the fourth event comprises at least one of the following:
a trigger event based on at least one of signal strength or signal quality; and
a location-based trigger event.

39. A terminal, comprising a processor, a memory, and a program or instructions stored in the memory and capable of running on the processor, wherein when the program or the instructions are executed by the processor, the steps of the mobility management method according to any one of claims 1 to 15 are implemented.

40. A network-side device, comprising a processor, a memory, and a program or instructions stored in the memory and capable of running on the processor, wherein when the program or the instructions are executed by the processor, the steps of the mobility management method according to any one of claims 16 to 20 are implemented.

41. A readable storage medium, wherein the readable storage medium stores a program or instructions, and when the program or instructions are executed by a processor, the steps of the mobility management method according to any one of claims 1 to 15 are implemented, or the steps of the mobility management method according to any one of claims 16 to 20 are implemented.

42. A chip, wherein the chip comprises a processor and a communication interface, wherein the communication interface is coupled to the processor, and the processor is configured to execute a program or instructions to implement the steps of the mobility management method according to any one of claims 1 to 15 or the steps of the mobility management method according to any one of claims 16 to 20.

43. A computer program, wherein the computer program is stored in a non-transitory storage medium, and the computer program is executed by at least one processor to implement the steps of the mobility management method according to any one of claims 1 to 15 or the steps of the mobility management method according to any one of claims 16 to 20.
